# EUROPÄISCHE PATENTSCHRIFT

(11) **EP 0 607 475 B1**
(45) Veröffentlichungstag und Bekanntmachung des Hinweises auf die Patenterteilung: **05.04.1995**
(21) Anmeldenummer: 93100508.6
(22) Anmeldetag: 15.01.1993
(51) Int. Cl.: A61G 7/10, F16J 3/06

(54) **Hubschlauch mit durch Klemmleisten geschlossenen Enden**
Elevator tube with ends closed by clamping strips
Tube élévateur avec extrémités obturées par des baguettes pincées

(43) Veröffentlichungstag der Anmeldung: 27.07.1994
(73) Patentinhaber: Schmidt & Lenhardt GmbH & Co. oHG, 88316 Isny (DE)
(72) Erfinder: Schmidt, Peter, W-7978 Eisenharz (DE)
(74) Vertreter: Hübner, Hans-Joachim, Dipl.-Ing.

(56) Entgegenhaltungen:
- EP-A- 0 347 652
- EP-A- 0 442 093
- DE-A- 3 908 229

## Beschreibung

Die Erfindung betrifft einen Hubschlauch zum Heben und Senken einer Hub- oder Schwenkplatte eines in eine Badewanne einsetzbaren Liftgerätes, wobei der Hubschlauch aus einem gewebearmierten, druckdichten, flexiblen, im wesentlichen nicht dehnbaren Material besteht und an den Enden mittels Klemmorganen druckdicht geschlossen ist.

Ein derartiger Hubschlauch ist aus der EP-C-0347 652 bekannt. Das eine Ende des Hubschlauches wird mittels einer Klemmleiste an der Bodenplatte des Liftgerätes festgenietet. Das andere Ende wird in gleicher Weise an der Unterseite der Hubplatte befestigt.Im Betrieb strömt in den Hubschlauch Druckwasser ein, um die Hubplatte mit einer darauf sitzenden oder liegenden Person anzuheben.Obwohl zur Betätigung ein vergleichsweise geringer Wasserleitungsdruck ausreicht, schreiben die Sicherheitsbestimmungen vor, daß dieser Hubschlauch einen Druck von über 25 bar aushalten muß. D.h., die Klemmverbindung an den Schlauchenden muß ebenfalls bei diesem Druck dicht bleiben. Die Befestigung der Klemmleiste ist somit problematisch, denn diese muß einmal das Schlauchende am Liftgerät festlegen und zum anderen das Schlauchende dicht verschließen. In der praktischen Ausführung wird die Klemmleiste mit einer Vielzahl von Nieten an der Bodenplatte bzw. der Hubplatte des Liftgerätes befestigt. In diesen Platten müssen daher entsprechende Löcher für die Nieten gebohrt werden. Entsprechende Löcher müssen in den Klemmleisten gebohrt werden, die in der Regel aus Metall bestehen. Auch wenn man auf diese Weise das Schlauchende druckdicht am Liftgerät befestigen kann, so verbleibt immer noch der Nachteil, daß bei einem Defekt des Schlauches umfangreiche Arbeiten notwendig sind, um die Nieten zu entfernen und den defekten Schlauch durch einen neuen zu ersetzen.

Aufgabe der Erfindung ist es, einen Hubschlauch mit seinen Klemmorganen so auszubilden, daß die Hubschlauchenden mit geringerem Montageaufwand sicher geschlossen werden können und bei einem Schlauchdefekt ein Auswechseln des Schlauches leichter möglich ist.

Diese Aufgabe wird erfindungsgemäß dadurch gelöst, daß jedes Klemmorgan aus zwei Klemmleisten mit einander zugewandten, quer zur Längsrichtung des Hubschlauches angeordneten Klemmflächen besteht, daß beide Leisten aus Kunststoff bestehen, von der Klemmfläche einer der beiden Leisten mehrere längsausgerichtete Zapfen rechtwinklig vorstehen, die je einen zylindrischen Schaft und einen verdickten Kopf aufweisen, wobei zwischen Kopf und Schaft eine Ringschulter gebildet ist, daß an der Klemmfläche der jeweils anderen Leiste eine Anzahl Löcher münden, wobei jedem Zapfen der Zapfenleiste ein Loch der Lochleiste zugeordnet ist, daß das flachgedrückte Ende des Hubschlauches in beiden aufeinander liegenden Materiallagen Stanzlöcher mit einer den Löchern der Lochleiste genau entsprechenden Anordnung und einem Durchmesser wenigstens gleich dem kleinsten Durchmesser der Löcher der Lochleiste aufweist, daß jedes Loch der Lochleiste einen, an deren Klemmfläche angrenzenden ersten Lochabschnitt kleinen Durchmessers zur Aufnahme des Schaftes eines Zapfens und einen zweiten Abschnitt größeren Durchmessers zur Aufnahme dessen Kopfes aufweist und die zwischen beiden Lochabschnitten gebildete ringförmige Stützfläche die Ringschulter eines Zapfens abstützt und ein unlösbares Widerlager bildet, wenn die beiden Leisten unter Zwischenlage des flachgedrückten Endes des Hubschlauches zusammengepreßt sind, wobei beide aufeinanderliegende Lagen des Hubschlauches im Bereich der Klemmflächen eine geringere Wandstärke aufweisen als im Nachbarbereich.

Die Erfindung bringt einmal den Vorteil, daß der Hubschlauch mit seinen beiden endseitigen Klemmleisten-Paaren eine Montageeinheit bildet, die mittels dieser Klemmleistenpaare auf einfache Weise am Liftgerät leicht lösbar verankert werden kann. Es genügen beispielsweise zwei Schrauben, um das Klemmleistenpaar an der Bodenplatte oder der Hubplatte festzuschrauben, da diese Verschraubung hinsichtlich der druckdichten Ausbildung des Schlauchendes nicht beizutragen hat. Der weitere wesentliche Vorteil ist der wesentlich geringere Arbeitsaufwand für das sichere Schließen des Schlauchendes. Die beiden Klemmleisten mit ihren komplementären Zapfen und Aufnahmelöchern sind genau aufeinander abgestimmte Kunststoff-Spritzgußteile, deren Dimensionen so bestimmt sind, daß die beiden Leisten mit einer hohen Preßkraft in einer Presse unlösbar miteinander verbunden werden. Mittels eines einzigen Preßhubes werden die beiden Klemmleisten formschlüssig miteinander verbunden, da die Köpfe der Zapfen hinter den Ringschultern der gestuften Löcher verrasten. Die Zapfen haben damit eine genau definierte Stellung in den Löchern der Lochleiste, sodaß eine absolut wiederholbare Klemmgenauigkeit gewährleistet ist.

Mit dem Merkmal von Anspruch 4 wird erreicht, daß eine zusätzliche Sicherheit gegen ein Durchrutschen des Schlauchendes im Klemmflächenspalt geschaffen wird, da sich die beiden Klemmleisten formschlüssig an den erzwungenen Widerlagerstufen des Schlauchrandes abstützen. Anspruch 5 führt zu dem Vorteil, daß der überstehende Schlauchrand sicher untergebracht ist und ein optisch ansprechendes Aussehen erreicht wird, da dieser Schlauchrand von der Stirnseite her nicht mehr sichtbar ist. Dank der Merkmale der Ansprüche 5 und 6 wird der eingeklemmte Schlauch - im Längsschnitt gesehen - wellenförmig oder zick-zack-förmig verformt und im Bereich dieser Verformung zusätzlich längs schmaler Verformungsflächen zusätzlich auf eine geringere Wandstärke zusammengedrückt, wodurch der Abdichtungseffekt weiter verbessert wird. Anspruch 8 dient der leichteren Montage, denn der Schlauch kann von der Arbeitsperson fast blind auf der Lochleiste positioniert werden, indem der Schlauch so aufgelegt wird, daß die Ansätze der Lochleiste die Ausstanzungen im Schlauch durchsetzen. Der Schlauch ist dann unverrückbar an der Lochleiste fixiert, sodaß dann nur noch die Zapfenleiste aufgepreßt zu werden braucht. Diese Ansätze tragen gemäß Anspruch 9 zentrale Löcher, die sich durch die ganze Leiste hindurcherstrecken. Mittels dieser Durchgangslöcher kann das Leistenpaket mittels weniger Schrauben am Liftgerät lösbar befestigt werden. Anspruch 10 schließlich führt zu einem besonders ansprechenden Aussehen des Schlauchabschlusses, da die eingeklemmten Teile des Schlauches verdeckt sind.

Anhand der Zeichnung, die ein Ausführungsbeispiel darstellt, wird die Erfindung näher beschrieben.

Es zeigt:
- FIG. 1: einen Längsschnitt durch das Klemmleistenpaket mit eingeklemmtem Schlauch,
- FIG. 2: eine Draufsicht auf die Lochleiste mit gerade aufgelegtem Schlauchende, unmittelbar bevor die Zapfenleiste aufgepreßt wird,
- FIG. 3: eine in Längsrichtung des Schlauches verlaufende Schnittansicht durch das Klemmleistenpaket in größerem Maßstab und
- FIG. 4: eine Ansicht eine herkömmlichen Liftgerätes, bei dem der Schlauch mit den beiden Klemmpaketen gemäß der Erfindung verwendet wird.

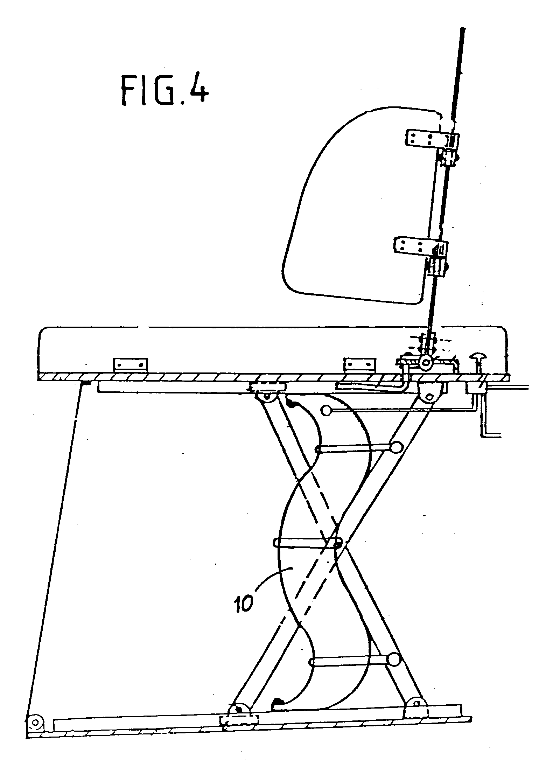

Das in FIG. 4 gezeigte Liftgerät weist einen Hubschlauch 10 zwischen einer Bodenplatte und einer Hubplatte auf. Es handelt sich dabei um ein Stück eines gewebearmierten Kunststoffschlauches, wie er als Feuerwehrschlauch Verwendung findet. Dieses Schlauchstück wird an seinen Enden dicht verschlossen, sodaß es mit Druckwasser von etwa 30 bar beaufschlagbar ist.

Zum Verschließen des Schlauchstückes 10 dienen zwei Klemmleisten 12, 14, von denen die Klemmleiste 12 als Zapfenleiste und die Leiste 14 als Lochleiste ausgebildet ist. Beide Leisten 12,14 sind Kunststoff-Spritzgußteile und bestehen aus hochwertigem, in gewissem Umfang elastischem Material. Beide Leisten 12, 14 haben gleich große Klemmflächen 16, 18, deren rechtwinklig zur Schlauchlänge gemessene Länge etwa gleich dem halben Schlauchumfang ist. Von der Klemmfläche 16 der Zapfenleiste 12 ragen vier auf der mittleren Längsmittelebene dieser Leiste 12 angeordnete Zapfen 20 rechtwinlig vor, die aus einem Schaft 22 und einem verdickten Kopf 24 bestehen. Der Schaft hat einen Durchmesser von 5,2 mm, während der Durchmesser des Kopfes 6 mm beträgt. Zwischen Schaft und Kopf wird somit eine Ringschulter 26 gebildet, deren radiale Breite 0,4 mm beträgt. Diese Ringschulter 26 erweitert sich vom Schaft 22 zum Kopf hin konisch unter einem Winkel von etwa 45°. An die Ringschulter 26 schließt sich ein zylindrischer Abschnitt und dann zum Kopfende hin ein sich konisch verjüngender Abschnitt an.

Die Lochleiste 14 hat vier gestufte Löcher 30, die in ihrer Anordnung den Zapfen 20 entsprechen. Die Löcher besetzen ebenfalls die mittlere Längsmittelebene der Klemmfläche 18 der Lochleiste 14. Jedes Loch besteht aus einem, an die Klemmfläche 18 angrenzenden Lochabschnitt 32 kleinen Durchmessers und einen daran anschließenden Lochabschnitt 34 größeren Durchmessers, wobei zwischen beiden Lochabschnitten 32,34 eine ringförmige Stützwand 36 gebildet wird. Die Stützwand 36 ist ebenfalls konisch ausgebildet und komplementär zur Ringschulter 26 angeordnet. Der Durchmesser des Lochabschnittes 32 beträgt 5,3 mm, hat also gegenüber dem Schaftdurchmesser des Zapfens 20 ein Übermaß von 0,1 mm. Der Lochabschnitt 34 hat einen Durchmesser von 6 mm und ist damit gleich dem größten Durchmesser des Kopfes 24.

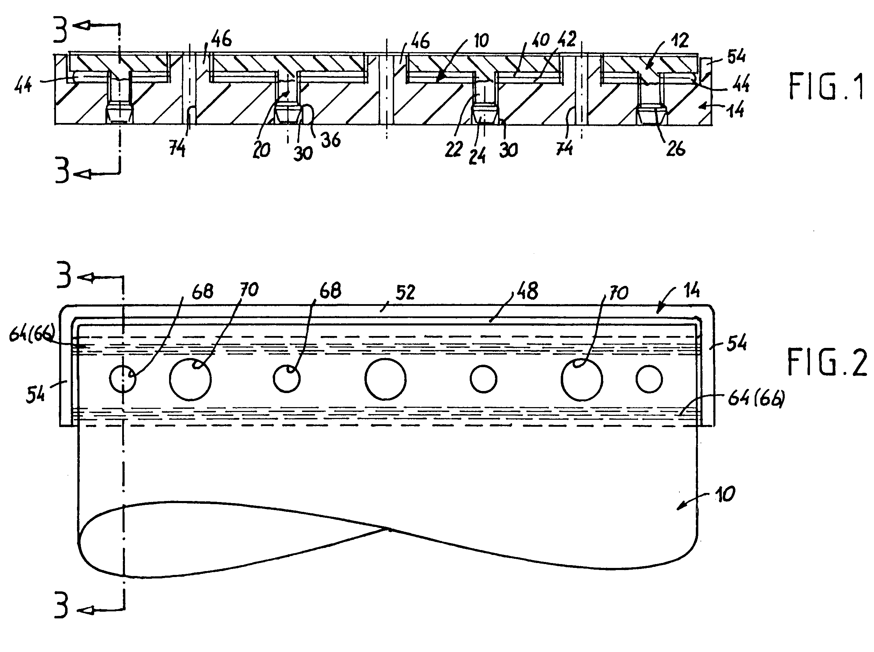

Die Längsabstände der Zapfen 20 und dementsprechend auch der Löcher 30 sind untereinander gleich, jedoch liegen die beiden endseitigen Zapfen 20 möglichst dicht an den Faltstellen der beiden zusammengepreßten Schlauchlagen 40, 42, wie aus FIG. 1 hervorgeht. Diese Faltstellen sind mit 44 bezeichnet.

Zwischen je zwei Löchern 30 der Lochleiste 14 befindet sich - mit diesen Löchern längausgerichtet - jeweils ein zylindrischer, von der Klemmfläche 18 hochstehender Ansatz 46 mit einem die Lochleiste 14 ganz durchsetzenden Zentralloch 74

Die Lochleiste 14 ist - in Längsrichtung des Schlauches gesehen - breiter ausgebildet als die Zapfenleiste 20 und es schließt sich einseitig an die Klemmfläche 18 der Lochleiste 14 eine oben offene Aufnahmekammer 48 an, in welcher ein über die Klemmflächen 16, 18 vorstehender Schlauchrand 50 aufgenommen ist. Die Kammer 48 ist von einer Stirnwand 52 begrenzt, die über die Klemmfläche 18 nach oben vorsteht und die Zapfenleiste 12 stirnseitig einfaßt. Diese Stirnwand 52 geht beidseitig in gleich hohe Seitenwände 54 über, die sich über die ganze Breite der Lochleiste 14 erstrecken.

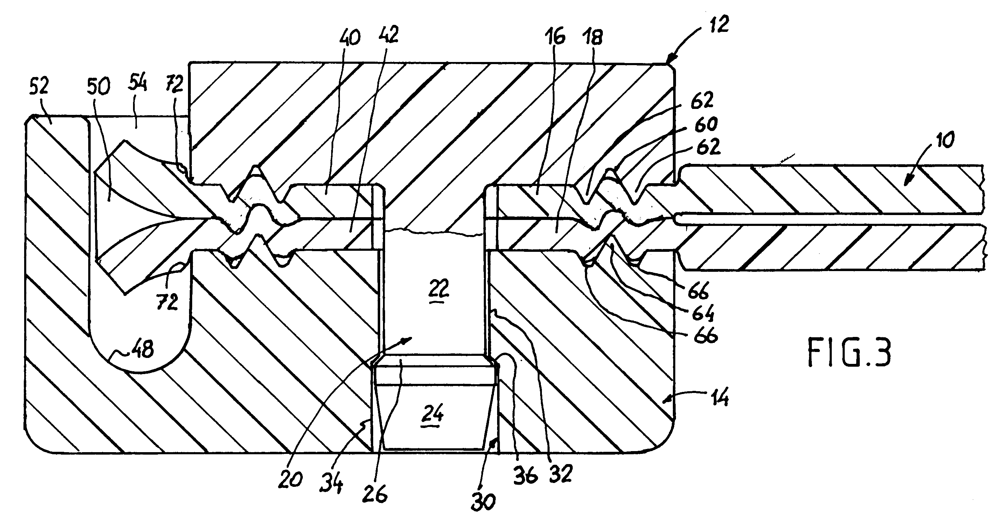

Zwischen dem Zapfen 20 und jeder der beiden Längsseiten der Zapfenleiste 12 ist die Klemmfläche 16 im Querschnitt gemäß FIG. 3 gewellt oder zick-zack-förmig ausgebildet und weist eine Nut 60 und zwei angrenzende über die Klemmfläche 16 um etwa 1 mm vorstehende Rippen 62 auf. Der Nut 60 ist an der Klemmfläche 18 der Lochleiste eine mittlere Rippe 64 mit einer Höhe von 1 mm zugeordnet, an die sich beidseitig jeweils Nuten 66 mit ebenfalls 1 mm Tiefe anschließen. Dieses Rippen-Nutensystem erstreckt sich exakt in Längrichtung der Leisten 12, 14 und damit parallel zur Zapfenreihe bzw. Lochreihe.

Das druckdichte Schließen eines Schlauchstückes 10 erfordert mit dieser Ausbildung der beiden Leisten 12, 14 nur sehr wenig Aufwand. In die in einem Pressenunterteil eingelegte Lochleiste 14 wird das flachgefaltete Ende des Schlauches 10, das vier Löcher 68 und jeweils dazwischen liegende Ausstanzungen 70 aufweist, eingeführt, wobei die Stirnwand 52 der Lochleiste 14 als Stirnanschlag und die Seitenwände 54 als Seitenführung für das Schlauchende dienen. Beim Ablegen des Schlauchendes gelangen die zylindrischen Ansätze 46 durch die Ausstanzungen 70 hindurch. Das Schlauchende ist damit absolut sicher auf der Klemmfläche 18 der Lochleiste 14 positioniert. Die vier weiteren Löcher 68 in beiden Lagen 40, 42 des Schlauchendes sind dann mit den Löchern 30 ausgerichtet. Nunmehr wird die Zapfenleiste vom Pressenoberteil abwärts gefahren. Das verjüngte Ende des Kopfes 24 dringt jeweils durch die Löcher 68 in den Schlauchlagen 40,42 und dann in den Lochabschnitt 32 kleineren Durchmessers hinein. Beim weiteren Einfahren des Zapfens 20 in das Loch 30 findet eine elastische Ausweitung des Lochabschnittes 32 durch die Kopfverdickung statt. Kurz vor Erreichen der Klemmstellung werden die beiden Schlauchlagen 40,42 zusammengepreßt und dabei in den Rippen-Nuten-Systemen 60-66 wellenförmig verformt. In dieser Klemmstellung hat die Ringschulter 26 zwischen Kopf 24 und Schaft 22 die Stützfläche 36 des Loches 30 erreicht, sodaß der Zapfen 20 widerhakenartig im Loch 30 verrastet. Die beiden Leisten 12,14 sind damit unlösbar verbunden und der Schlauch 10 ist im Klemmbereich absolut abgedichtet. Die beiden Schlauchlagen 40,42 sind auch gegen hohe Zugbeanspruchungen in Längsrichtung des Schlauches 10 dank der Rippen-Nuten-Systeme 60-66 einerseits und der Schultern 72 andererseits formschlüssig geschützt, die sich zwischen den zusammengepreßten Schlauchabschnitten im Klemmflächenbereich und dem überstehenden Schlauchrand 50 in der Kammer 48 gebildet haben.

## Patentansprüche

1. Hubschlauch (10) zum Heben und Senken einer Hub-oder Schwenkplatte eines in eine Badewanne einsetzbaren Liftgerätes, wobei der Hubschlauch (10) aus einem gewebearmierten, druckdichten, flexiblen, im wesentlichen nicht dehnbaren Material besteht und an den Enden mittels Klemmorganen (12,14) druckdicht geschlossen ist, dadurch gekennzeichnet, daß jedes Klemmorgan aus zwei Klemmleisten (12, 14) miteinander zugewandten, quer zur Längsrichtung des Hubschlauches (10) angeordneten Klemmflächen (16,18) besteht, daß beide Leisten (12, 14) aus Kunststoff bestehen, von der Klemmfläche (16) einer der Leisten (12, 14) mehrere längs ausgerichtete Zapfen (20) vorstehen, die je einen zylindrischen Schaft (22) und einen verdickten, zum Ende hin sich vorzugsweise verjüngenden Kopf (24) aufweisen, wobei zwischen Kopf (24) und Schaft (22) eine Ringschulter (26) gebildet ist, daß an der Klemmfläche (18) der jeweils anderen Leiste (14) eine Anzahl Löcher (30) münden, wobei jedem Zapfen (20) der Zapfenleiste (12) ein Loch (30) der Lochleiste (14) zugeordnet ist, daß das flachgedrückte Ende des Hubschlauches (10) in beiden aufeinanderliegenden Materiallagen (40,42) Stanzlöcher (68) mit einer den Löchern (30) der Lochleiste (14) genau entsprechenden Anordnung und einem Durchmesser wenigstens gleich dem kleinsten Durchmesser des Loches (30) der Lochleiste (14) aufweist, daß jedes Loch (30) der Lochleiste (14) einen, an die Klemmfläche (18) angrenzenden ersten Lochabschnitt (32) kleinen Durchmessers zur Aufnahme des Schaftes (22) eines Zapfens (20) und einen zweiten Abschnitt (34) größeren Durchmessers zur Aufnahme dessen Kopfes (24) aufweist und die zwischen beiden Lochabschnitten (32, 34) gebildete ringförmige Stützfläche (36) die Ringschulter (26) eines Zapfens (20) abstützt und ein unlösbares Widerlager bildet, wenn die beiden Leisten (12,14) unter Zwischenlage des flachgedrückten Endes des Hubschlauches (10) zusammengepreßt sind, wobei beide aufeinanderliegenden Lagen (40,42) des Hubschlauches (10) im Bereich der Klemmflächen (16,18) eine geringere Wandstärke aufweisen als im Nachbarbereich.

2. Hubschlauch nach Anspruch 1, dadurch gekennzeichnet, daß er mit seinen beiden endseitigen Klemmorganen (12,14) eine Montageeinheit bildet und mittels der Klemmorgane (12, 14) am Liftgerät verankerbar ist.

3. Hubschlauch nach Anspruch 2, dadurch gekennzeichnet, daß die Klemmorgane (12,14) unter Beibehaltung des druckdichten Schlauchabschlusses am Liftgerät lösbar montiert sind.

4. Hubschlauch nach einem der Ansprüche 1 bis 3, dadurch gekennzeichnet, daß die Klemmleisten (12,14) im Abstand vom Schlauchende am Schlauch (10) angebracht sind und beide Klemmleisten (12,14) sich an Widerlagerschultern (72) formschlüssig abstützen, die zwischen beiden Lagen des nichtgepreßten, überstehenden Schlauchrandes (50) und den im Klemmflächenbereich gepreßten Schlauchabschnitten gebildet sind.

5. Hubschlauch nach Anspruch 4, dadurch gekennzeichnet, daß eine Klemmleiste (14) eine in Schlauchlängsrichtung gemessene größere Breite als die andere Klemmleiste (12) aufweist, daß beide Leisten (12,14) gleich große Klemmflächen (16,18) besitzen, und daß sich an die Klemmfläche (18) der breiteren Leiste (14) eine Kammer (48) zur Aufnahme des überstehenden Schlauchrandes (50) anschließt, die von einer Stirnwand (52) der breiteren Leiste (14) begrenzt wird.

6. Hubschlauch nach einem der Ansprüche 1 bis 5, dadurch gekennzeichnet, daß in der Klemmfläche (16) einer Leiste (12) zwischen der Reihe an Zapfen-Loch-Verbindungen beider Leisten (12,14) und wenigstens einem Längsrand dieser Leiste (12) eine zum Längsrand parallel verlaufende Nut (60) und in der anderen Leiste (14) eine mit dieser Nut (60) korrespondierende Rippe (64) ausgebildet ist und daß die Schlauchlagen (40, 42) in diesem Nut-Rippen-Bereich im Querschnitt wellenförmig verformt sind.

7. Hubschlauch nach Anspruch 6, dadurch gekennzeichnet, daß an jeder Leiste (12, 14) mindestens eine Nut (60, 66) und eine benachbarte Rippe (62, 64) ausgebildet sind.

8. Hubschlauch nach einem der Ansprüche 5 bis 7, dadurch gekennzeichnet, daß die breitere Leiste (14), die Löcher (30) aufweisende Leiste ist und daß diese zwischen je zwei Löchern (30) einen vorstehenden zylindrischen Ansatz (46) in Längsausrichtung mit den Löchern (30) aufweist und daß in der anderen Leiste (12) passende Hohlräume und in beiden Schlauchlagen (40,42) passende Ausstanzungen (70) zur Positionierhilfe vorgesehen sind.

9. Hubschlauch nach Anspruch 8, dadurch gekennzeichnet, daß die Leiste (14) eine Anzahl durchgehender Montagelöcher (74) aufweist, die koaxial die Ansätze (46) durchsetzen.

10. Hubschlauch nach einem der Ansprüche 1 bis 9, dadurch gekennzeichnet, daß eine der Leisten (12,14) eine über ihre ganze Länge reichende, sich rechtwinklig zur Klemmflächenebene erstreckende Stirnwand (52) und zwei über ihre Breite reichende gleichhohe Seitenwände (54) aufweist und daß diese drei Wände eine dreiseitige Fassung für die andere Leiste (12) bilden.

## Claims

1. Lifting hose (10) for raising and lowering a lift or swivel platform of a lifting apparatus useful for insertion in a bathtub, the lifting hose (10) consisting of a fabric-reinforced, pressure-tight, flexible, substantially non-expandable material and being sealed pressure-tight at its ends by means of clamping elements
characterised in that
each clamping element consists of two clamping strips (12, 14) with clamping surfaces (16, 18) facing one another and disposed transversely to the longitudinal direction of the lifting hose (10); the two strips (12, 14) are made of plastic; a plurality of pegs (20) aligned longitudinally protrude at right angles from the clamping surface (16) of one of the strips (12, 14), each peg (20) having a cylindrical shank (22) and a thickened head part (24), preferably tapering towards the end, an annular collar (26) being formed between said head (24) and said shank (22); a plurality of holes (30) terminate at the clamping surface (18) of the respective opposite strip (14), with one hole (30) in the holed strip (14) assigned to each peg (20) of the peg strip (12); when the end of the lifting hose (10) is pressed flat, there are punched holes (68) in the two mutually adjacent layers of material (40, 42), arranged in a manner exactly matching the holes (30) in the holed strip (14) and having a diameter at least equal to the smallest diameter of the hole (30) in the holed strip (14); each hole (30) in the holed strip (14) has, adjacent to the clamping surface (18), a first hole portion (32) of small diameter for receiving the shank (22) of a peg (20), and a second portion (34) of larger diameter for receiving the head (24) of said peg (20); and that the annular supporting surface (36) formed between the two holed sections (32, 34) supports the annular collar (26) of a peg (20) and forms an inseparable counter-bearing when the two strips (12, 14) are pressed together with the compressed end of the lifting hose (10) inserted between them, the two mutually adjacent layers (40, 42) of the lifting hose (10) having a thinner wall thickness in the region of the clamping surfaces (16, 18) than in the neighbouring region.

2. Lifting hose as claimed in Claim 1, characterised in that, together with its two clamping elements (12, 14) at each end, it forms a single assembly unit and can be firmly attached to the lifting apparatus by means of said clamping elements (12, 14).

3. Lifting hose as claimed in Claim 2, characterised in that the clamping elements (12, 14) are detachably fixed to the lifting apparatus, retaining the pressure-tight end of the hose.

4. Lifting hose as claimed in any of Claims 1 to 3, characterised in that the clamping elements (12, 14) are attached to the hose (10) at a distance from the end of the hose, and that the two clamping elements (12, 14) are supported, in a positive fit, on counter-bearing collars (72) formed between the two layers of the protruding edge of the hose (50), which is not pressed together, and the sections of hose pressed together in the region of the clamping surface.

5. Lifting hose as claimed in Claim 4, characterised in that one clamping strip (14) is greater in width when measured in the longitudinal direction of the hose than the other clamping strip (12), that the two strips (12, 14) possess clamping surfaces (16, 18) of equal size, and that, adjacent to the clamping surface (18) of the wider strip (14), there is a chamber (48) for receiving the protruding edge of the hose (50), said chamber being delimited by a front wall (52) of said wider strip (14).

6. Lifting hose as claimed in any of Claims 1 to 5, characterised in that there is a groove (60) formed in the clamping surface (16) of one strip (12) between the row of peg-and-hole connections of the two strips (12, 14) and at least one longitudinal edge of that strip (12), running parallel to said longitudinal edge, and there is a rib (64) corresponding to said groove (60) formed in the other strip (14), and that the layers of hose (40, 42) are deformed into a wave shape in this rib-and-groove region, when seen in cross-section.

7. Lifting hose as claimed in Claim 6, characterised in that there are at least one groove (60, 66) and one adjacent rib (62, 64) formed on each strip (12, 14).

8. Lifting hose as claimed in any of Claims 5 to 7, characterised in that the wider strip (14) is the strip containing holes (30), and that, between every two holes (30), said strip (14) has a projecting cylindrical lug (46) longitudinally aligned with said holes (30), and that matching cavities are provided in the other strip (12), and matching punched-out sections (70) are provided in the two layers of hose (40, 42) as a positioning aid.

9. Lifting hose as claimed in Claim 8, characterised in that the strip (14) has a number of assembly holes (74) which pass coaxially through the lugs (46).

10. Lifting hose as claimed in any of Claims 1 to 9, characterised in that one of the strips (12, 14) has a front wall (52) extending over its entire length and projecting at right angles to the plane of the clamping surfaces, and two equally high side walls (54) extending over its width, and that said three walls form a three-sided mount for the other strip (12).

## Revendications

1. Tube élévateur (10) destiné à lever et abaisser un plateau levant ou pivotant d'un appareil élévateur pouvant être placé dans une baignoire, le tube élévateur (10) étant réalisé en un matériau renforcé de tissu, étanche à la pression, flexible, sensiblement non-extensible et étant obturé, aux extrémités, de manière étanche à la pression à l'aide d'organes de serrage (12, 14), caractérisé en ce que chaque organe de serrage consiste en deux baguettes de serrage (12, 14) à surfaces de serrage (16, 18) orientées l'une vers l'autre et disposées transversalement au sens longitudinal du tube élévateur (10), que les deux baguettes (12, 14) sont en matière plastique, que de la surface de serrage (16) de l'une des baguettes (12, 14) s'élèvent plusieurs tenons (20) alignés longitudinalement et qui présentent, chacun, un corps (22) cylindrique et une tête (24) grossie s'effilant, de préférence, vers l'extrémité, entre la tête (24) et le corps (22) étant formé un épaulement annulaire (26), qu'à la surface de serrage (18) de l'autre baguette (14) correspondante aboutissent un nombre de trous (30), à chaque tenon (20) de la baguette à tenons (12) étant associé un trou (30) de la baguette à trous (14), que l'extrémité aplatie du tube élévateur (10) présente, dans les deux couches de matériau superposées (40, 42), des trous perforés (68) à disposition correspondant exactement aux trous (30) de la baguette à trous (14) et à diamètre au moins égal au diamètre le plus petit du trou (30) de la baguette à trous (14), que chaque trou (30) de la baguette à trous (14) présente une première partie de trou (32) adjacente à la surface de serrage (18), de petit diamètre, destinée à recevoir le corps (22) d'un tenon (20), et une seconde partie de trou (34) de diamètre supérieur, destinée à recevoir sa tête (24) et que la surface d'appui annulaire (36) formée entre les deux parties de trou (32, 34) supporte l'épaulement annulaire (26) d'un tenon (20) et constitue une butée inamovible lorsque les deux baguettes (12, 14) sont pressées l'une contre l'autre avec intercalage de l'extrémité aplatie du tube élévateur (10), les deux couches superposées (40, 42) du tube élévateur (10) présentant une épaisseur de paroi plus faible à l'endroit des surfaces de serrage (16, 18) que dans la zone environnante.

2. Tube élévateur suivant la revendication 1, caractérisé en ce qu'il constitue, avec ses deux organes de serrage (12, 14) aux extrémités, un ensemble de montage et qu'il peut être ancré à l'appareil élévateur à l'aide des organes de serrage (12, 14).

3. Tube élévateur suivant la revendication 2, caractérisé en ce que les organes de serrage (12, 14) sont montés de manière amovible sur l'appareil élévateur, tout en conservant l'obturation étanche à la pression du tube.

4. Tube élévateur suivant l'une des revendications 1 à 3, caractérisé en ce que les baguettes de serrage (12, 14) sont placées sur le tube (10), à distance de l'extrémité du tube, et que les deux baguettes de serrage (12, 14) s'appuient en liaison de forme sur les épaulements-butées (72) qui sont formés entre les deux couches du bord surélevé (50) non-pressé du tube et les parties de tube pressées à l'endroit des surfaces de serrage.

5. Tube élévateur suivant la revendication 4, caractérisé en ce que l'une (14) des baguettes de serrage présente une largeur plus grande, mesurée dans le sens longitudinal du tube, que l'autre baguette de serrage (12), que les deux baguettes (12, 14) possèdent des surfaces de serrage (16, 18) de même grandeur, et qu'à la surface de serrage (18) de la baguette la plus large (14) aboute une chambre (48) destinée à recevoir le bord surélevé (50) du tube qui est délimité par une paroi frontale (52) de la baguette la plus large (14).

6. Tube élévateur suivant l'une des revendications 1 à 5, caractérisé en ce que dans la surface de serrage (16) de l'une (12) des baguettes est réalisée, entre la rangée d'assemblages tenon-trou des deux baguettes (12, 14) et au moins un bord longitudinal de cette baguette (12), une rainure (60) s'étendant parallèlement au bord longitudinal et, dans l'autre baguette (14), une nervure (64) correspondant à cette rainure (60) et que les couches de tube (40, 42) sont, à l'endroit de cette rainure-nervure, déformées de manière ondulée en section.

7. Tube élévateur suivant la revendication 6, caractérisé en ce qu'à chaque baguette (12, 14) sont réalisées au moins une rainure (60, 66) et une nervure (62, 64) adjacente.

8. Tube élévateur suivant l'une des revendications 5 à 7, caractérisé en ce que la baguette la plus large (14) est la baguette présentant les trous (30) et qu'elle présente, entre chaque fois deux trous (30), un épaulement cylindrique saillant (46) aligné longitudinalement sur les trous (30) et que dans l'autre baguette (12) sont prévus des creux correspondants et, dans les deux couches de tube (40, 42), des perforations correspondantes (70) destinées à aider au positionnement.

9. Tube élévateur suivant la revendication 8, caractérisé en ce que la baguette (14) présente un nombre de trous de montage traversants (74) qui traversent les épaulements (46) de manière coaxiale.

10. Tube élévateur suivant l'une des revendications 1 à 9, caractérisé en ce que l'une des baguettes (12, 14) présente une paroi frontale (52) s'étendant sur toute sa longueur et perpendiculairement au plan des surfaces de serrage et deux parois latérales (54) de même hauteur s'étendant sur sa largeur et que ces trois parois forment une monture à trois côtés pour l'autre baguette (12).
